(19) Europäisches Patentamt
European Patent Office
Office européen des brevets

(11) **EP 4 037 964 B1**

(12) **FASCICULE DE BREVET EUROPEEN**

(45) Date de publication et mention
de la délivrance du brevet:
**19.03.2025 Bulletin 2025/12**

(21) Numéro de dépôt: **20793270.8**

(22) Date de dépôt: **30.09.2020**

(51) Classification Internationale des Brevets (IPC):
***B63G 8/00*** (2006.01)   ***G01V 3/165*** (2006.01)

(52) Classification Coopérative des Brevets (CPC):
**G01V 1/3817; G01V 1/3808; G01V 1/3843;**
B63G 2008/004

(86) Numéro de dépôt international:
**PCT/EP2020/077407**

(87) Numéro de publication internationale:
**WO 2021/064044 (08.04.2021 Gazette 2021/14)**

(54) **SYSTÈME D'EXPLORATION SOUS-MARINE COMPRENANT UNE FLOTTE DE DRONES**

UNTERWASSER-ERKUNDUNGSSYSTEM MIT EINER FLOTTE VON DROHNEN

SUBMARINE EXPLORATION SYSTEM COMPRISING A FLEET OF DRONES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.10.2019 FR 1910850**
**01.10.2019 FR 1910851**
**01.10.2019 FR 1910852**

(43) Date de publication de la demande:
**10.08.2022 Bulletin 2022/32**

(73) Titulaire: **Abyssa**
**64200 Bassussarry (FR)**

(72) Inventeurs:
• **RAVILLY, Morgane, Eliane, Aline**
**17000 LA ROCHELLE (FR)**
• **COLINET, Michel, Philippe**
**24170 SAINT GERMAIN DE BELVES (FR)**

(74) Mandataire: **Aquinov**
**12, Cours Xavier Arnozan**
**33000 Bordeaux (FR)**

(56) Documents cités:
WO-A1-2012/052564   WO-A1-2016/038453
CN-A- 103 336 267   CN-A- 105 319 534
CN-A- 105 510 878

**Description**

L'invention concerne le domaine de l'exploration sous-marine. Plus précisément, l'invention concerne l'exploration des grands fonds marins à l'aide d'une flotte de drones sous-marins.

Les grands fonds marins comportent des sites à fort potentiel minier. En effet, l'activité hydrothermale au niveau des dorsales océaniques a par exemple contribué à créer des sites hydrothermaux, comme des amas sulfurés polymétalliques, riches en métaux, et notamment en Zinc, en Silice, en Cuivre et en Plomb, et généralement enrichis en Or et en Argent.

Malgré leurs potentiels, ces sites ne sont pas encore exploités. D'une part, la profondeur à laquelle se situent ces sites, au-delà de 800m, voire à plus de 4000m, rendent les techniques classiques d'exploration sous-marine peu adaptées. D'autre part, les faibles dimensions de ces sites, 10 à 500 mètres de rayon, au regard de la surface océanique considérablement étendue dans laquelle ils sont susceptibles de se trouver rendent complexe l'exploration de cette surface afin de les identifier. Enfin, tous les sites ne sont pas susceptibles d'être exploités. En effet, certains sites sont dits inactifs, à savoir froids et avec une faible biodiversité présumée, et d'autres sites sont dits actifs, à savoir chauds et présentant des oasis de vie. Il va ainsi de soi que les sites actifs doivent être exempts de toute exploitation, afin de préserver l'environnement écologique marin. Or, les techniques actuelles de découverte des sites sont essentiellement basées sur la détection de panaches hydrothermaux présents dans la colonne d'eau qui ne sont associés qu'aux sites actifs et sont donc inopérantes pour localiser des sites inactifs.

Il existe ainsi un besoin pour une solution d'exploration des grands fonds marins afin d'identifier des sites à potentiel minier, qui soit efficace et rapide et qui permette de détecter des sites actifs et des sites inactifs.

Dans le domaine de l'exploration sous-marine, une solution connue consiste à employer plusieurs drones sous-marins autonomes, également appelés AUV (de l'anglais Autonomous Underwater Vehicle), pourvus de capteurs permettant de détecter des sites à potentiel minier, les drones formant une flotte qui couvre les fonds marins. Ces drones, capables de se déplacer de façon autonome selon un plan de vol donné, présentent l'inconvénient d'être extrêmement onéreux, notamment du fait, d'une part, de la précision du système de navigation qu'ils emploient, et d'autre part, du fait de la multiplicité des capteurs embarqués. Cette solution est notamment décrite dans les documents brevet WO2016038453 et WO2012052564. Or, afin de permettre une exploration efficace des fonds marins, il est nécessaire d'employer une multitude de drones, chacun couvrant une partie de la surface à explorer, de sorte à diminuer le temps d'exploration. Ces contraintes rendent ainsi impossible une exploration des grands fonds efficace, rapide et à bas coût. En outre, les capteurs embarqués dans ces drones ne permettent pas de détecter les sites inactifs.

L'invention s'inscrit dans ce contexte et vise à pallier les problèmes identifiés, en proposant une solution d'exploration des grands fonds marins répondant aux besoins de rapidité, d'efficacité et de détection des sites actifs et inactifs tout en maintenant un coût d'exploration raisonnable.

A ces fins, l'invention a pour objet un système d'exploration sous-marine, comportant :

a. un drone sous-marin maître agencé pour se déplacer de façon autonome selon un plan de vol prédéterminé et comportant au moins deux systèmes de caractérisation du fond marin et un module de communication pour émettre des signaux de communication ;

b. une pluralité de drones sous-marins suiveurs, comportant chacun au moins un capteur de champ magnétique apte à mesurer le champ magnétique au voisinage du drone suiveur, chaque drone suiveur comportant en outre un module de communication pour recevoir des signaux de communication du drone maître.

Selon l'invention, le drone maître est agencé pour émettre des instructions de navigation à destination des drones suiveurs et chaque drone suiveur est agencé pour se déplacer de façon autonome selon ladite instruction de déplacement de sorte à ce que son déplacement soit asservi au déplacement du drone maître.

On comprend ainsi que, d'une part, seul le drone maître nécessite un équipement de navigation précis pour se déplacer conformément à son plan de vol, les drones suiveurs se bornant à suivre le drone maître dans son déplacement. Dès lors, l'équipement des drones suiveurs peut être simplifié, ce qui en réduit le coût. D'autre part, il a été constaté que les sites hydrothermaux à potentiel minier, comme les amas sulfurés, présentent une signature magnétique significative avec des anomalies magnétiques de fond de mer dont l'amplitude crête à crête excède plusieurs centaines à milliers de nanoTeslas. De plus, cette signature magnétique est persistante, même après l'arrêt de l'activité hydrothermale comme dans le cas des sites inactifs. Du fait de cette persistance, l'utilisation de systèmes de détection de champ magnétique dans les drones suiveurs permet ainsi de détecter des anomalies magnétiques pouvant être aussi bien des sites actifs que des sites inactifs. Le drone maître peut en outre embarquer d'autres types de capteurs permettant, suite à la détection d'une anomalie magnétique, de caractériser la source de l'anomalie magnétique et notamment de discriminer s'il s'agit d'un site actif ou inactif.

On entend par drone sous-marin tout type de véhicule capable de se déplacer de façon autonome sous l'eau.

Avantageusement, les modules de communication des drones maître et suiveurs sont des modules de communication acoustique. En d'autres termes, les données émises par le module de communication de chacun des drones maître et suiveurs sont par exemple codées par modulation de la fréquence d'un signal acoustique émis par ledit module de communication. Le cas échéant, le drone maître peut être agencé pour émettre périodiquement des instructions de navigation à destination de tous les drones suiveurs, chaque drone suiveur étant agencé pour se déplacer conformément à la dernière instruction reçue jusqu'à réception de l'instruction suivante. La périodicité sur une période courte, par exemple 6 secondes, des émissions des instructions de navigation par le drone maître permet d'assurer que le déplacement des drones suiveurs sera asservi au déplacement du drone maître sur une distance courte, par exemple sur une distance inférieure à 15 mètres, de sorte à éviter des dérives trop importantes et ainsi à augmenter la robustesse du système.

Avantageusement, le drone maître est agencé pour déterminer de façon périodique, à partir du plan de vol, un cap à suivre et une géométrie de formation des drones suiveurs, chaque instruction de navigation émise par le drone maître à destination de tous les drones suiveurs comprenant ledit cap à suivre et ladite géométrie de formation. Le cas échéant, chaque drone suiveur est agencé, à la réception de chaque instruction de navigation, pour se déplacer dans une direction conforme audit cap à suivre, et pour déterminer et adopter une position relative par rapport au drone maître conforme à ladite géométrie de formation, jusqu'à la réception de l'instruction de navigation suivante. Par exemple, le plan de vol prédéterminé peut définir un plan de lignes de navigation ainsi qu'une géométrie de formation, adaptés à l'exploration d'une zone donnée selon des conditions relatives aux drones maître et suiveurs, le drone maître étant agencé pour déterminer ledit cap à suivre à partir du plan de lignes de navigation et à l'aide de sa propre position sur ledit plan de lignes de navigation. On entend par géométrie de formation un ensemble de positions relatives des drones maître et suiveurs, et par exemple comprendre, pour chaque drone suiveur, sa position spatiale par rapport au drone maître, à savoir à gauche, à droite, devant ou derrière, ainsi que la distance latérale séparant ce drone suiveur du drone maître.

Selon un exemple, une géométrie de formation peut consister en une formation des drones maître et suiveurs en peigne centré sur le drone maître, les drones suiveurs étant répartis de part et d'autre du drone maître en étant régulièrement espacés de 100 m. Dans cette formation, on comprend que les drones maître et suiveurs se déplacent progressivement et simultanément, au fur et à mesure de l'émission et de la réception des instructions de navigation, selon des lignes parallèles telles que définies dans le plan de lignes de navigation du plan de vol, en respectant la géométrie de formation définie par le drone maître. Les déplacements s'opèrent par exemple avec une altitude de vol de 100 m au-dessus du fond et une vitesse de navigation de 3 à 4 nœuds. Cette stratégie de reconnaissance constitue un bon compromis entre les objectifs de détection et les besoins d'efficacité et de rapidité.

Selon un exemple, le drone maître et chaque drone suiveur comportent une mémoire, une pluralité de géométries de formation étant chargée dans chacune des mémoires et chaque géométrie de formation étant associée à un code de formation identifiant cette géométrie. Le cas échéant, les instructions de navigation émises par le drone maître contiennent le code de formation identifiant la géométrie de formation déterminée par le drone maître et chaque drone suiveur est agencé pour déterminer sa position relative par rapport au drone maître en sélectionnant la géométrie de formation chargée dans sa mémoire et associée audit code de formation transmis.

Dans un mode de réalisation de l'invention, chaque drone suiveur comporte un système de navigation agencé pour déterminer une position du drone suiveur à un instant donné et pour se déplacer depuis cette position déterminée en fonction de l'instruction de navigation reçue du drone maître. Le drone suiveur peut être en particulier agencé pour se déplacer, depuis cette position déterminée, selon le cap à suivre et en conservant sa position relative au drone maître telle que définie dans la géométrie de formation de l'instruction de navigation émise par le drone maître. Par exemple, le système de navigation peut comporter des instruments de mesure de l'attitude du drone suiveur à un instant donné, et notamment une centrale d'attitude de type MEMS (de l'anglais Micro Electro Mechanical System) permettant notamment d'obtenir des informations relatives au roulis et au tangage du drone suiveur et un magnétomètre permettant d'obtenir un cap magnétique du drone suiveur. La position du drone suiveur à l'instant donné peut ainsi être estimée par le système de navigation en fonction de son attitude mesurée par lesdits instruments de mesure, de l'instruction de navigation reçue et à partir de sa dernière position estimée. Ce type de système, réalisant une navigation dite à l'estime, offre un compromis satisfaisant entre la précision d'estimation de la position du drone suiveur et le coût du système de navigation.

Avantageusement, le système de navigation de chaque drone suiveur est agencé pour déterminer une altitude du drone suiveur par rapport au fond marin à un instant donné, chaque drone suiveur étant agencé pour se déplacer en conservant une altitude constante par rapport au fond marin. On comprend ainsi que le drone suiveur est autonome en ce qui concerne son altitude. Dans le cas contraire, un asservissement complet du déplacement du drone suiveur, y compris en ce qui concerne son altitude, pourrait amener une collision avec une variation locale du fond marin qui ne serait pas prise en compte par le plan de vol au niveau du drone maître. L'autonomie du drone suiveur vis-à-vis de l'altitude permet ainsi de prendre en compte ces variations locales.

De préférence, le module de communication de chaque drone suiveur est agencé pour transmettre au drone maître un signal comportant ladite position déterminée du drone suiveur.

Avantageusement, le module de communication de chaque drone suiveur est agencé pour transmettre au drone maître un signal comportant ladite position déterminée du drone suiveur et un état de fonctionnement du drone suiveur, le drone maître étant agencé pour déterminer, à partir de l'état de fonctionnement des drones suiveurs, ledit cap à suivre et ladite géométrie de formation. Par exemple, chaque drone suiveur est agencé pour déterminer son état de fonctionnement, à savoir un état viable ou un état défaillant. Le cas échéant, en cas de défaillance, chaque drone suiveur peut être agencé pour quitter la formation et pour rejoindre une base. Avantageusement, à la réception d'un signal comprenant un état de défaillance d'un drone suiveur, le drone maître peut être agencé pour déterminer une nouvelle géométrie de formation adaptée aux drones suiveurs dont l'état est viable.

En effet, lors d'une défaillance d'un drone suiveur, l'exploration de la zone à explorer par la formation de drones comporte une lacune d'enregistrement correspondant à la zone désormais inexplorée par le drone suiveur défaillant. Afin de combler cette lacune, le drone maître peut déterminer un nouveau plan de vol, à savoir un nouveau plan de lignes de navigation et/ou une nouvelle géométrie de formation. Par exemple, en cas de défaillance d'un drone défaillant dans une géométrie de formation en peigne, le drone maître pourra déterminer une nouvelle géométrie de formation dans laquelle un drone suiveur viable placé à l'extrémité du peigne prend la place du drone suiveur défaillant, et un nouveau plan de lignes de navigation dans lequel les lignes de navigation sont resserrées. Le nouveau plan de vol pourra par exemple être sélectionné, en fonction des états de fonctionnement des drones suiveurs, parmi une pluralité de plans de vol stockés dans une mémoire du drone maître, chaque plan de vol étant par exemple associé à un nombre donné de drones suiveurs viables.

Avantageusement, le module de communication de chaque drone suiveur peut être agencé pour recevoir un écho du signal émis par le module de communication du drone suiveur au drone maître et réfléchi par le drone maître et pour déterminer, à partir dudit écho, une distance relative séparant le drone suiveur du drone maître. Le cas échéant, le système de navigation du drone suiveur est agencé pour déterminer ladite position du drone suiveur audit instant donné à l'aide de la distance relative déterminée. Le drone suiveur détermine ainsi sa distance relative au drone maître par écholocalisation du drone maître au moyen du signal que le drone suiveur émet.

Le système de navigation de chaque drone suiveur peut ainsi fonctionner alternativement dans un mode de navigation dit « à l'estime », selon lequel seules son attitude et l'instruction de navigation reçue sont utilisées pour estimer sa position audit instant donné à partir de sa dernière position estimée, et dans un mode dit « en contraction », intervenant à chaque émission d'un signal par son module de communication et selon lequel sa distance relative au drone maître est intégrée dans la détermination de sa position audit instant donné. Cette intégration permet de corriger des dérives pouvant intervenir lors du mode de navigation à l'estime et pouvant entrainer un écart dans le positionnement relatif du drone suiveur au drone maître. Par exemple, la distance relative au drone maître déterminée par écholocalisation pourra être employée dans la détermination de la position audit instant donné en la comparant à la distance relative fixée par la géométrie de formation déterminée par le drone maître. En cas de dérive, le drone suiveur peut ainsi corriger son déplacement de sorte à se déplacer conformément au cap à suivre tout en reprenant sa position relative au drone maître telle que définie dans la géométrie de formation de l'instruction de navigation reçue du drone maître.

Dans un mode de réalisation de l'invention, le drone maître comporte un système de navigation agencé pour déterminer une position du drone maître à un instant donné et une mémoire dans laquelle est chargé le plan de vol, le drone maître étant agencé de sorte à se déplacer depuis sa position déterminée conformément au plan de vol chargé dans sa mémoire. Le cas échéant, la précision du système de navigation du drone maître est supérieure à la précision des systèmes de navigation des drones suiveurs. Par exemple, le système de navigation du drone maître peut comporter une centrale inertielle de type FOG (de l'anglais Fiber Optic Gyroscope), recevant des informations d'un système de positionnement acoustique comme un DVL (de l'anglais Doppler Velocity Log) et comportant un module de traitement des données intégrant par exemple un algorithme de type filtre de Kalman.

Avantageusement, le drone maître comporte une pluralité de systèmes de caractérisation du fond marin de types différents. Le cas échéant, chaque drone suiveur comporte un unique système de caractérisation du fond marin, formé par ledit système de détection de champ magnétique. Les drones suiveurs sont ainsi dits mono-capteur et le drone maître est dit multi-capteur. Par exemple, le drone maître peut comporter au moins deux systèmes de caractérisation du fond marin choisis parmi la liste non limitative de systèmes suivantes : un système de détection de champ magnétique, un système de cartographie bathymétrique (comme par exemple un sondeur bathymétrique multifaisceaux), un système d'imagerie acoustique (comme par exemple un sonar à balayage latéral), un système de détection d'objet (comme une caméra) et un système de mesure de paramètres hydrodynamiques physiques ou chimiques. De la sorte, en cas de détection d'une anomalie magnétique à l'aide des systèmes de détection de champ magnétique des drones suiveurs et éventuellement du drone maître, le drone maître peut permettre de discriminer, à l'aide des systèmes de caractérisation du fond marin dont il dispose, le type de la source de l'anomalie magnétique et en particulier s'il s'agit d'un site hydrothermal à potentiel minier actif ou inactif.

Dans un exemple de réalisation de l'invention, le système de détection de champ magnétique de chaque drone suiveur comporte un capteur de champ magnétique apte à mesurer le champ magnétique au voisinage du drone suiveur. Le cas échéant, le système selon l'invention peut comporter un module de traitement de données agencé pour extraire à partir du champ magnétique mesuré une valeur indépendante des valeurs du champ magnétique ambiant et du champ magnétique propre au drone suiveur et pour détecter à partir de ladite valeur une anomalie magnétique. Le cas échéant, le capteur de champ magnétique peut être un magnétomètre vectoriel dit 3 composantes, comprenant trois magnétomètres agencés à 90° les uns des autres. Ce type de magnétomètre permet de s'affranchir en partie des effets des champs magnétiques parasites générés par le drone suiveur.

Avantageusement, le module de traitement de données est agencé pour corriger le champ magnétique total mesuré de sorte à extraire ladite valeur, la correction étant opérée en fonction de l'attitude de déplacement du drone suiveur, à savoir son roulis, son tangage et son cap, et en fonction du champ géomagnétique local ambiant. Il a en effet été observé que le champ magnétique mesuré par le capteur de champ magnétique est la somme des anomalies magnétiques présentes localement au niveau du fond marin, du champ géomagnétique ambiant et des champs magnétiques parasites liés au drone suiveur, à savoir les champs magnétiques induit et permanent. Or, les champs magnétiques induit et permanent générés par le drone suiveur dépendent de l'attitude de déplacement du drone suiveur. Le drone suiveur étant équipé d'un système de navigation, le module de traitement de données du système de détection de champ magnétique peut ainsi récupérer les données relatives à l'attitude de déplacement du drone suiveur à chaque instant et peut déterminer à partir de ces données les champs magnétiques induit et permanent, par exemple en déterminant les coefficients du tenseur de susceptibilité magnétique et le vecteur d'aimantation rémanente du drone suiveur. Par exemple, la valeur pourra être extraite au moyen de l'opération de correction suivante :

[Math. 1]

$$A = H_{mes} - \left(H_i + H_p\right) - F,$$

où A représente la valeur extraite, $H_{mes}$ le champ magnétique mesuré par le capteur de champ magnétique, $H_i$ le champ magnétique induit du drone suiveur, $H_p$ le champ magnétique permanent du drone suiveur et F le champ géomagnétique local ambiant.

Le cas échéant, le module de traitement de données du système de détection de champ magnétique peut être agencé pour détecter une anomalie magnétique si ladite valeur extraite est supérieure à une valeur seuil prédéterminée.

Si on le souhaite, le module de traitement de données peut être embarqué dans un, plusieurs, voire chaque drone suiveur. En variante, le module de traitement de données peut être externe aux drones du système selon l'invention.

Selon un mode de réalisation de l'invention, les modules de communication acoustique des drones maître et suiveurs sont agencés pour émettre des signaux de communication sur un même canal de communication. Le cas échéant, les modules de communication des drones maître et suiveurs sont agencés de sorte à ce que les signaux de communication émis par les drones maître et suiveurs sur ledit canal de communication soient multiplexés. Si on le souhaite, les modules de communication des drones maître et suiveurs peuvent être agencés de sorte à ce que les signaux de communication émis par les drones maître et suiveurs sur ledit canal de communication soient multiplexés temporellement. Le cas échéant, les modules de communication des drones maître et suiveurs peuvent être agencés pour émettre des signaux acoustiques modulés sur une même fréquence porteuse ou sur une même bande de fréquence.

De préférence, les modules de communication des drones maître et suiveurs sont agencés pour émettre ensemble périodiquement une trame de données, chacun de ces modules de communications étant agencé pour émettre un signal de communication dans au moins un intervalle de temps de cette trame de données qui lui est attribué. En d'autres termes, les modules de communication accèdent à tour de rôle au canal de communication selon une technique de type accès multiple à répartition dans le temps (également appelée TDMA de l'anglais Time Division Multiple Access).

Avantageusement, le module de communication du drone maître est agencé pour émettre une instruction de navigation à destination de tous les drones suiveurs dans le premier intervalle de temps de la trame de données. On comprend ainsi qu'une même instruction, à savoir un cap à suivre et un code relatif à une géométrie de formation établis à partir du plan de vol du drone maître, est envoyée pour tous les drones suiveurs. Si on le souhaite, le module de communication du drone maître est agencé pour émettre plusieurs instructions de navigation à destination de tous les drones suiveurs dans plusieurs intervalles de temps disjoints de la trame de données, les modules de communication d'une partie seulement des drones suiveurs étant agencés pour émettre un signal à destination du drone maître dans des intervalles de temps de la trame de données situés entre un premier et un deuxième intervalles de temps successifs de la trame de données attribués au drone maître. Le cas échéant, les modules de communication d'une autre partie des drones suiveurs sont agencés pour émettre un signal à destination du drone maître dans des intervalles de temps de la trame de données situés entre le deuxième et un troisième intervalle de temps successif de la trame de données attribués au drone maître. Cette caractéristique permet d'accélérer l'émission des instructions de navigation à destination des drones suiveurs de sorte à diminuer leurs dérives au cours de leur déplacement.

Avantageusement, le module de communication de chacun des drones suiveurs est agencé pour émettre un signal à destination du drone maître comprenant une information relative à sa position dans un intervalle de temps de la trame de données qui lui est attribué. De préférence, le module de communication de chacun des drones suiveurs est agencé pour émettre un signal à destination du drone maître comprenant une information relative à sa position et une information relative à son état de fonctionnement dans ledit intervalle de temps qui lui est attribué.

De préférence, les modules de communication des drones maître et suiveurs sont agencés de sorte à ce qu'un intervalle de temps de garde sépare deux intervalles de temps successifs attribués à des modules de communication.

Avantageusement encore, le module de communication du drone maître est agencé pour émettre une information d'état du système d'exploration sous-marine à destination d'une unité de contrôle distante dans le dernier intervalle de temps de la trame de données.

Selon un exemple de réalisation de l'invention, les modules de communication des drones maître et suiveurs sont agencés de sorte à ce que la durée des intervalles de temps attribués à ces modules de communication soit identique pour tous les modules de communications et de sorte que la période d'émission des instructions de navigation par le drone maître corresponde à un déplacement de chacun des drones suiveurs inférieur à une distance seuil prédéterminée. Par exemple, la durée de la période d'émission des instructions de navigation est fixée de sorte que les drones suiveurs puissent se déplacer selon un cap donné par le drone maître sur une distance de 15 mètres maximum à une vitesse de 3,5 nœuds.

Selon un mode de réalisation de l'invention, chaque drone suiveur comporte un corps comprenant un compartiment avant isolé du reste du corps, et chaque drone suiveur comporte un système de propulsion, une batterie, et le système de détection de champ magnétique est agencé dans le compartiment avant et le système de propulsion et la batterie sont agencés dans le corps en dehors du compartiment avant. On limite ainsi l'impact des champs magnétiques induit et permanent du système de propulsion et de la batterie sur le système de détection de champ magnétique.

Avantageusement, le corps est formé d'un compartiment arrière, d'un compartiment central et du compartiment avant, chaque compartiment étant isolé des autres, et le système de propulsion est agencé dans le compartiment arrière et la batterie est agencée dans le compartiment central.

Le cas échéant, le module de communication acoustique et/ou le système de navigation du drone suiveur sont agencés dans le compartiment avant.

L'invention a également pour objet un procédé d'exploration sous-marine mis en œuvre par un système d'exploration sous-marine selon l'invention. Avantageusement, le procédé comporte les étapes suivantes :

a. Sélection d'au moins un plan de vol prédéterminé par le drone maître ;

b. Déplacement autonome du drone maître en fonction du plan de vol sélectionné ;

c. Emission par le drone maître d'instructions de navigation, déterminées à partir du plan de vol sélectionné, à destination des drones suiveurs ;

d. Déplacement autonome de chacun des drones suiveurs selon l'instruction de navigation reçue.

Si on le souhaite, le procédé peut comporter une étape d'émission par chacun des drones suiveurs d'un signal à destination du drone maître comportant au moins une information relative à son état de fonctionnement et, dans le cas où le drone maître reçoit un signal d'un drone suiveur comportant une information indiquant une défaillance de ce drone suiveur, une étape de reconfiguration dans laquelle le drone maître sélectionne un nouveau plan de vol en fonction des drones viables restants.

Avantageusement, le procédé peut comporter une étape d'écholocalisation du drone maître opérée par chacun des drones suiveurs à l'aide du signal émis comportant au moins une information relative à son état de fonctionnement, et une étape de correction du déplacement du drone suiveur au moyen d'une distance relative au drone maître obtenue lors de l'étape d'écholocalisation.

Si on le souhaite, le procédé peut comporter une étape de mesure du champ magnétique local mise en œuvre par chacun des drones suiveurs, une étape d'extraction à partir de chaque champ magnétique mesuré d'une valeur indépendante du champ magnétique ambiant et du champ magnétique propre au drone suiveur ayant mesuré ce champ magnétique, et une étape de détection à partir de ladite valeur extraite d'une anomalie magnétique.

L'invention a également pour objet un système d'exploration sous-marine comportant un drone sous-marin maître et une pluralité de drones sous-marins suiveurs dont les déplacements sont asservis au déplacement du drone maître, chacun des drones maître et suiveur comportant un module de communication acoustique pour émettre des signaux de communication sur un même canal de communication, caractérisé en ce que les modules de communication des drones maître et suiveurs sont agencés de sorte à ce que les signaux de communication émis par les drones maître et suiveurs sur ledit canal de communication soient multiplexés.

Il a en effet été constaté que les ondes électromagnétiques se propagent difficilement dans l'eau, en particulier dans les profondeurs d'exploration envisagées. Il est donc préférable d'envisager des moyens de communication acoustique entre les drones. Pour autant, dans la mesure où des liaisons montantes et descendantes doivent être établies entre le drone maître et chacun des drones suiveurs, il importe de prévoir une solution permettant à chacune de ces liaisons d'être établie, de façon simple et fiable, sans perturber les autres. On comprend ainsi que le multiplexage des signaux de communication acoustiques émis par les modules de communication des drones du système selon l'invention permet d'établir une communication entre les drones sur un même canal et ainsi de mettre en place de façon simple et fiable un asservissement quasi-simultané des déplacements de tous les drones suiveurs au déplacement du drone maître.

L'invention a également pour objet un procédé de communication entre un drone maître et une pluralité de drones suiveurs d'un système d'exploration sous-marine selon l'invention

L'invention a également pour objet un système d'exploration sous-marine comportant un drone sous-marin maître et une pluralité de drones sous-marins suiveurs dont les déplacements sont asservis au déplacement du drone maître, dans lequel chaque drone suiveur comporte un corps comprenant un compartiment avant isolé du reste du corps, dans lequel chaque drone suiveur comporte un système de propulsion, une batterie et un système de détection de champ magnétique, et dans lequel le système de détection de champ magnétique est agencé dans le compartiment avant et le système de propulsion et la batterie sont agencés dans le corps en dehors du compartiment avant.

Grâce à l'invention, la séparation des différents éléments des drones suiveurs dans des compartiments isolés magnétiques permet de minimiser l'impact des différentes sources de champ magnétique sur la détection d'une anomalie magnétique par le système de détection de chaque drone suiveur, et en particulier de la batterie et des éléments moteurs.

La présente invention est maintenant décrite à l'aide d'exemples uniquement illustratifs et nullement limitatifs de la portée de l'invention, et à partir des illustrations jointes, dans lesquelles :

[Fig. 1] représente, schématiquement et partiellement, une vue d'un système d'exploration sous-marine selon un mode de réalisation de l'invention ;

[Fig. 2] représente un procédé d'exploration sous-marine mis en œuvre par le système d'exploration sous-marine de la [Fig. 1] ;

[Fig. 3] représente un procédé de communication entre les drones maître et suiveurs du système d'exploration sous-marine de la [Fig. 1] ;

[Fig. 4] représente des déplacements du drone maître et d'un des drones suiveurs du système d'exploration sous-marine de la [Fig. 1] ;

[Fig.5] représente différentes étapes d'un procédé de détection d'une anomalie magnétique mis en œuvre par le système d'exploration sous-marine de la [Fig. 1] ; et

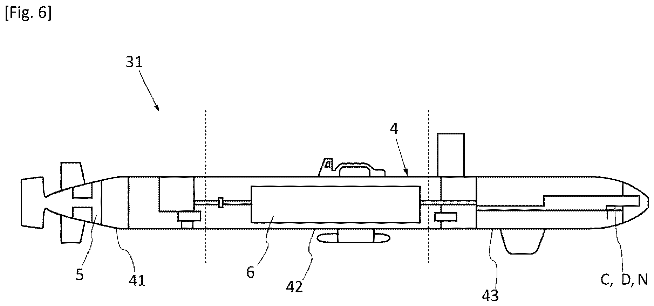

[Fig. 6] représente une vue en coupe d'un drone suiveur du système d'exploration sous-marine de la [Fig. 1].

Dans la description qui suit, les éléments identiques, par structure ou par fonction, apparaissant sur différentes figures conservent, sauf précision contraire, les mêmes références.

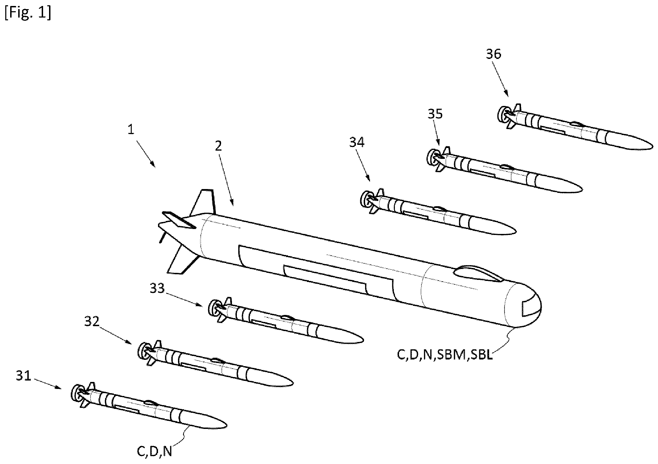

On a représenté en [Fig. 1] une vue d'un système d'exploration sous-marine 1 selon un mode de réalisation de l'invention.

Le système 1 comporte un drone sous-marin maître 2 et une pluralité de drones sous-marins suiveurs 31 à 36. Les drones 2 et 31 à 36 sont des drones sous-marins capables de se déplacer de façon autonome. Chacun des drones maître 2 et suiveurs 31 à 36 est équipé d'un module de communication C pour émettre et recevoir des signaux, d'un système de détection de champ magnétique D apte à mesurer un champ magnétique et d'un système de navigation N agencé pour déterminer une position du drone à un instant donné. Le drone maître 2 comporte en outre, et contrairement aux drones suiveurs 31 à 36, une pluralité de systèmes de caractérisation du fond marin dont un système de cartographie bathymétrique sous la forme d'un sondeur bathymétrique multifaisceaux SBM et un système d'imagerie acoustique sous la forme d'un sonar à balayage latéral SBL. Le drone maître 2 est ainsi multi-capteur et les drones suiveurs 31 à 36 sont donc mono-capteur.

Le système de navigation N de chacun des drones suiveurs 31 à 36 comporte une centrale d'attitude de type MEMS apte à déterminer le roulis et le tangage du drone suiveur. En outre, le système de détection de champ magnétique D de chaque drone suiveur fournit un cap magnétique au système de navigation N. En variante, on pourrait prévoir que chaque drone suiveur soit pourvu d'un deuxième système de détection de champ magnétique pour fournir ledit cap magnétique, le système de détection de champ magnétique D étant dans ce cas dédié à la mesure du champ magnétique. Le système de navigation N du drone maître 2 comporte une centrale inertielle de type FOG, recevant des informations fournies par un système de positionnement acoustique comme un DVL (de l'anglais Doppler Velocity Log) et comportant un module de traitement des données de position intégrant un algorithme de type filtre de Kalman. La précision du système de navigation du drone maître 2 est ainsi bien supérieure à celle du système de navigation de chacun des drones suiveurs 31 à 36.

Les modules de communication C des drones maître 2 et suiveurs 31 à 36 sont des modules de communication acoustique, de sorte à ce que les drones puissent échanger des données sous la forme de signaux acoustiques modulés et émis par lesdits modules de communication sur un même canal de communication, à savoir sur une même bande de fréquence. Par ailleurs, les signaux acoustiques émis par les drones maître 2 et suiveurs 31 à 36 sur ce canal de communication sont multiplexés temporellement, de sorte à ce que les modules de communication C accèdent à tour de rôle au canal de communication selon une technique de type accès multiple à répartition dans le temps, chacun des drones émettant ainsi un signal acoustique dans au moins un intervalle de temps d'une trame de données périodique qui lui est attribué.

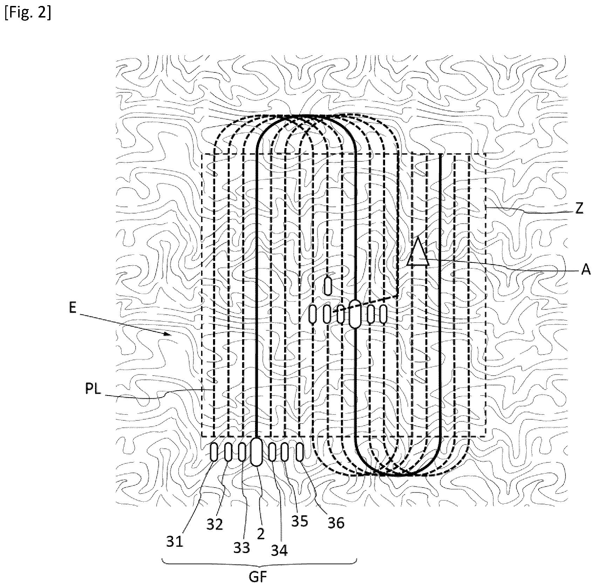

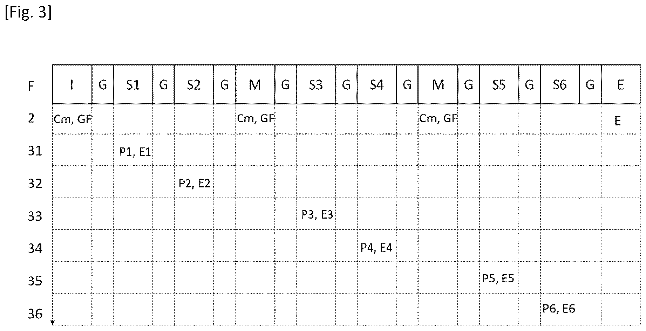

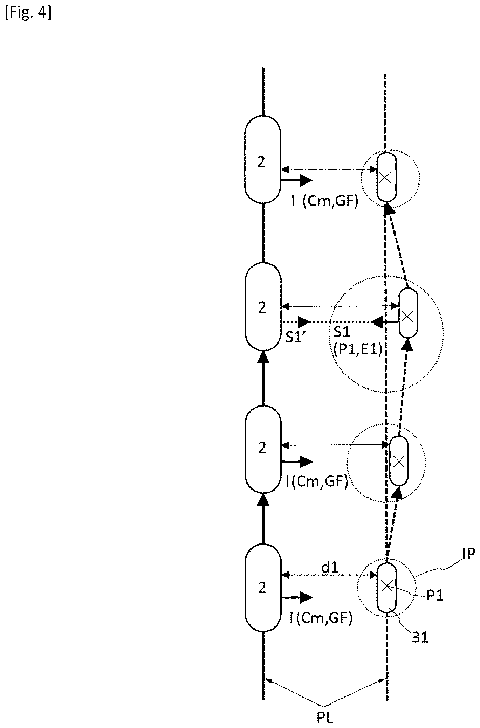

On a représenté en [Fig. 2], en vue de dessus, un procédé d'exploration sous-marine d'une zone d'exploration Z mis en œuvre par le système d'exploration 1, en [Fig. 3] un procédé de communication entre le drone maître 2 et les drones suiveurs 31 à 36 au cours de l'exploration, ainsi qu'une trame de données F qui circule ainsi dans le canal de communication formé entre les drones et en [Fig. 4] un exemple d'asservissement d'un déplacement d'un des drones suiveurs 31 au déplacement du drone maître 2.

Au préalable de l'exploration, une pluralité de géométries de formation est chargée dans une mémoire de chacun des drones maître 2 et suiveurs 31 à 36. Chaque géométrie de formation décrit, pour un nombre donné de drones suiveurs et pour chacun de ces drones suiveurs, sa position spatiale par rapport au drone maître 2, à savoir s'il doit se placer à gauche, à droite, devant ou derrière le drone maître 2, et une distance latérale séparant ce drone suiveur du drone maître 2. Toujours au préalable de l'exploration, le drone maître sélectionne un plan de vol E, à savoir une géométrie de formation GF donnée et un plan de lignes de navigation PL associé à ladite géométrie de formation GF et adapté à la zone d'exploration Z envisagée. Chaque ligne du plan de lignes PL définit ainsi le déplacement d'un drone dans la zone d'exploration Z (en traits pleins pour le drone maître 2 et en traits pointillés pour les drones suiveurs 31 à 36 sur la [Fig. 2]). Telle que décrit sur la [Fig. 2], la géométrie de formation GF définie dans le plan de vol E sélectionné correspond à une formation en peigne centrée sur le drone maître 2, les drones suiveurs étant répartis de part et d'autre du drone maître 2 en étant régulièrement espacés de 100 mètres.

Le drone maître 2 est agencé pour se déplacer de façon autonome, à l'aide de son système de navigation N, conformément au plan de vol E et à sa propre ligne dans le plan de lignes de navigation PL. Lors de son déplacement le long du plan de vol E, le drone maître 2 émet périodiquement, par exemple toutes les 6 secondes, via son module de communication C, une instruction de navigation I à destination de tous les drones suiveurs 31 à 36 comprenant un cap à suivre Cm, déterminé à partir du plan de vol E ainsi qu'un code identifiant la géométrie de formation GF définie dans le plan de vol sélectionné E. Plusieurs instructions de navigation I sont ainsi émises à destination de tous les drones suiveurs dans plusieurs intervalles de temps de la trame de données F.

A la réception d'une instruction de navigation I par son module de communication C, chaque drone suiveur 31 à 36 détermine sa position relative au drone maître 2 en sélectionnant la géométrie de formation chargée dans sa mémoire et associée audit code contenu dans l'instruction de navigation I. Chaque drone suiveur 31 à 36 se déplace alors de façon autonome, conformément à l'instruction de navigation I reçue, en fonction du cap à suivre et de la position estimée du drone suiveur par son système de navigation N, en conservant sa position relative par rapport au drone maître 2, jusqu'à la réception de l'instruction de navigation suivante. Plus spécifiquement, chaque drone suiveur 31 à 36 adopte un mode de navigation dit à l'estime, dans lequel il estime sa position P1 à P6 en fonction de son déplacement, déterminé par le cap magnétique mesuré par le système de détection de champ magnétique et de son attitude mesurée par la centrale d'attitude, à partir de sa dernière position estimée. Le drone suiveur se déplace alors vers une nouvelle position déterminée par sa position estimée et par le cap à suivre Cm contenu dans l'instruction de navigation I, et en conservant sa position relative au drone maître 2 définie dans la géométrie de formation GF.

Comme illustré en [Fig. 4], le mode de navigation à l'estime introduit une dérive dans le déplacement de chaque drone suiveur (illustré par le drone suiveur 31), due à l'incertitude de positionnement introduite par l'estimation de la position P1 à P6. En d'autres termes, l'incertitude de positionnement (matérialisée par le cercle IP en [Fig. 4]) croît au cours du temps, ce qui peut générer, d'une part, une déviation du drone suiveur 31 par rapport à sa ligne de navigation dans le plan de lignes PL et, d'autre part, une différence entre la distance latérale réelle d1 entre le drone maître 2 et le drone suiveur 31 et celle fixée dans la géométrie de formation GF.

Chaque drone suiveur 31 à 36 émet un signal S1 à S6 à destination du drone maître 2 contenant sa position estimée P1 à P6 ainsi qu'un état de fonctionnement E1 à E6, à savoir un état viable ou un état défaillant, dans un intervalle de temps de la trame de données F qui lui est attribué. Afin de remédier aux dérives des déplacements des drones suiveurs décrites ci-dessus, le module de communication C de chaque drone suiveur reçoit un écho S1' du signal S1 réfléchi par le drone maître 2 et détermine, à partir dudit écho, la distance relative réelle d1 séparant le drone suiveur du drone maître. Le drone suiveur 31 passe alors du mode de navigation à l'estime à un mode de navigation dit « en contraction », dans lequel cette distance relative d1 déterminée par écholocalisation est intégrée dans la détermination de la position du drone suiveur par le système de navigation N et dans le déplacement du drone suiveur. D'une part, cette distance relative déterminée d1 permet de réduire l'incertitude de positionnement. D'autre part, la comparaison entre la distance relative réelle d1 et celle fixée dans la géométrie de formation GF permet au drone suiveur 31 de regagner sa ligne de navigation, et ainsi de respecter cette géométrie de formation GF.

Dans l'exemple décrit, les instructions de navigation I émises par le drone maître 2 sont dépourvues d'instructions quant à une altitude à suivre. En outre, le système de navigation N de chaque drone suiveur 31 à 36 comporte un altimètre agencé pour déterminer une altitude du drone suiveur par rapport au fond marin à un instant donné, chaque drone suiveur étant agencé pour se déplacer en conservant une altitude constante par rapport au fond marin.

Dans l'exemple de la [Fig. 1], le drone 32 subit une avarie et envoie ainsi, dans son intervalle de temps, un signal S2 contenant sa position P2 et un état de fonctionnement E2 indiquant une défaillance. A la suite de l'envoi du signal S2, le drone 32 n'est plus en état de poursuivre l'exploration et quitte la zone d'exploration Z par exemple pour rejoindre une base. A la réception du signal S2 indiquant l'état de défaillance E2 du drone suiveur 32, le drone maître sélectionne un nouveau plan de vol E définissant une nouvelle géométrie de formation GF adaptée aux drones suiveurs restant 31 et 33 à 36. Dans l'exemple décrit, le drone suiveur 36 remplace le drone suiveur 32 et emprunte ainsi sa position. Afin de conserver une exploration homogène de la zone d'exploration Z, le drone maître 2 détermine en outre un nouveau plan de lignes de navigation PL. Le drone maître 2 opère ainsi une reconfiguration de la flotte de drones.

Comme décrit en [Fig. 4], un intervalle de temps de garde G sépare l'émission successive de signaux par les drones maître 2 et suiveurs 31 à 36 dans la trame de données F. On notera en outre que les intervalles de temps attribués aux drones suiveurs 31 à 36 sont distribués entre les différents intervalles de temps attribués au drone maître 2.

Enfin, le drone maître 2 émet une information d'état E du système d'exploration sous-marine à destination d'une unité de contrôle distante, par exemple située dans un bateau en surface de la zone d'exploration Z, dans le dernier intervalle de temps de la trame de données F.

La durée des intervalles de temps attribués aux modules de communication C des drones maître 2 et suiveurs 31 à 36 est identique pour tous ces modules de communication. En outre, la période d'émission des instructions de navigation I par le drone maître est telle que le déplacement de chacun des drones suiveurs 31 à 36 entre deux instructions de navigation successives est sensiblement égal à 15 mètres, selon une vitesse de 3,5 nœuds. On constate ainsi que les drones suiveurs 31 à 36 se déplacent selon des déplacements élémentaires de 15 mètres en suivant le plan de vol E, ce qui permet d'obtenir un asservissement précis de la trajectoire des drones suiveurs 31 à 36 à celle du drone maître 2, tout en garantissant une robustesse du système d'exploration 1 en cas de dérive ou de défaillance de l'un des drones suiveurs.

Chaque système de détection de champ magnétique D des drones maître 2 et suiveurs 31 à 36 comporte un capteur de champ magnétique, sous la forme d'un magnétomètre vectoriel dit 3 composantes, comprenant trois magnétomètres directionnels agencés à 90° les uns des autres, chacun étant apte à mesurer le champ magnétique au voisinage du drone. On a ainsi représenté en [Fig. 4] dans le premier graphique G1 un exemple de mesures des trois composantes du champ magnétique obtenues par chacun des magnétomètres directionnels de l'un des drones suiveurs 31 à 36 au cours de l'exploration de la zone Z.

Le système d'exploration 1 comporte un module de traitement de données (non représenté), externe aux drones 2 et 31 à 36, agencé pour calculer un champ magnétique total à partir des mesures des trois composantes du champ magnétique illustrées dans le graphique G1. Ce champ magnétique total a été illustré dans le deuxième graphique G2.

Le module de traitement de données récupère, à partir du système de navigation N au cours de l'exploration, les données relatives au déplacement du drone suiveur lors de l'exploration de la zone Z, et en particulier son cap qui a été représenté dans le troisième graphique G3 et son roulis et son tangage qui ont été illustrés dans le quatrième graphique G4. En outre, le module de traitement de données détermine le tenseur de susceptibilité magnétique du drone suiveur ainsi que le vecteur d'aimantation rémanente, par exemple au moyen d'un jeu de données magnétique dit de calibration. Le module de traitement de données corrige, à partir de cet ensemble de données, le champ magnétique total du graphique G2, afin d'en éliminer les champs magnétiques induit et permanent ainsi que le champ magnétique ambiant, afin d'en extraire une valeur représentée dans le graphique G5. On constate sur ce graphique G5 que la valeur extraite présente une variation, correspondant à une anomalie magnétique A dans la zone d'exploration. En outre, les données récoltées par les systèmes de caractérisation du fond marin SBM et SBL du drone maître permettent de caractériser la source de l'anomalie magnétique A et particulier de déterminer s'il s'agit d'un site hydrothermal à potentiel minier inactif.

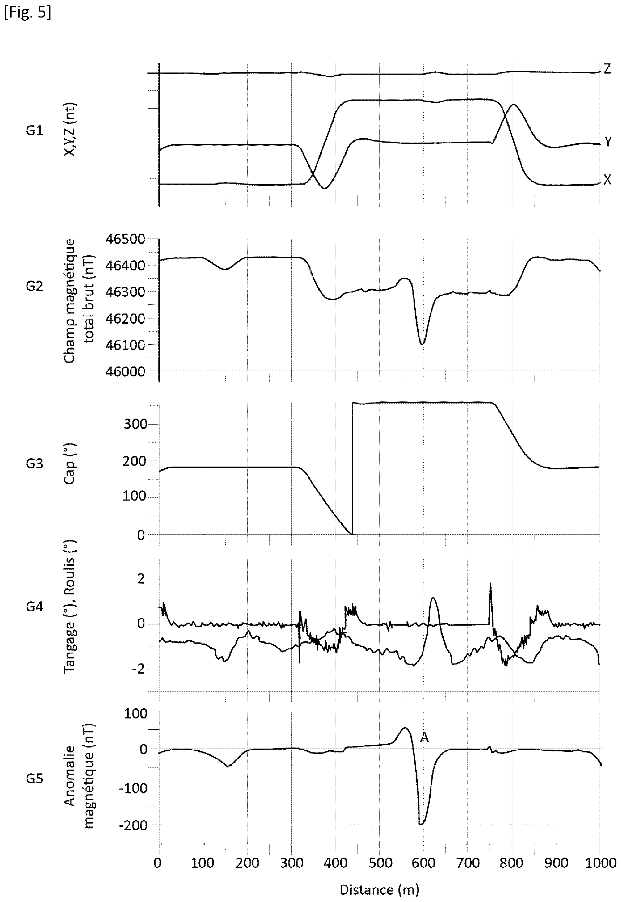

Enfin, on a représenté en [Fig. 5] une vue en coupe d'un des drones suiveurs 31, étant entendu que la structure de tous les drones suiveurs 31 à 36 est identique. Le drone 31 comporte un corps 4 formé d'un compartiment arrière 41, d'un compartiment central 42 et d'un compartiment avant 43. Chaque compartiment est isolé des autres.

Le drone suiveur 31 comporte un système de propulsion 5 agencé dans le compartiment arrière 41 et une batterie 6 agencée dans le compartiment central 42. Le système de détection de champ magnétique D, le module de communication acoustique C et le système de navigation N sont agencés dans le compartiment avant 43, de sorte à limiter l'impact des champs magnétiques induit et permanent du système de propulsion et de la batterie sur le système de détection de champ magnétique D.

La description qui précède explique clairement comment l'invention permet d'atteindre les objectifs qu'elle s'est fixée, et notamment en proposant un système d'exploration sous-marine composé d'une flotte de drones sous-marins comprenant un drone maître autonome et des drones suiveurs dont les déplacements sont asservis à celui du drone maître. Le système qui a été décrit permet ainsi une exploration des grands fonds marins rapide, efficace, permettant de détecter et de discriminer les sites actifs des sites inactifs et dont le cout d'exploration est maitrisé.

En tout état de cause, l'invention ne saurait se limiter aux modes de réalisation spécifiquement décrits dans ce document, et s'étend en particulier à tous moyens équivalents et à toute combinaison techniquement opérante de ces moyens. En particulier, on pourra envisager d'autres types de formations des drones maître et suiveurs. On pourra également envisager l'utilisation d'un autre type de procédé de communication entre les drones maître et suiveurs qu'un TDMA ou encore une structure interne des drones suiveurs différente de celle qui a été décrite.

**Revendications**

1. Système (1) d'exploration sous-marine, comportant :

   a. un drone sous-marin maître (2) agencé pour se déplacer de façon autonome selon un plan de vol prédéterminé (E) et comportant au moins deux systèmes de caractérisation du fond marin et un module de communication (C) pour émettre des signaux de communications ;
   b. une pluralité de drones sous-marins suiveurs (31, 32, 33, 34, 35, 36), comportant chacun au moins un capteur de champ magnétique (D) apte à mesurer le champ magnétique au voisinage du drone suiveur, chaque drone suiveur comportant en outre un module de communication (C) pour recevoir des signaux de communication du drone maître;
   c. le drone maître étant agencé pour émettre des instructions de navigation (I) à destination des drones suiveurs et chaque drone suiveur étant agencé pour se déplacer de façon autonome selon ladite instruction de déplacement de sorte à ce que son déplacement soit asservi au déplacement du drone maître.

2. Système (1) selon la revendication précédente, dans lequel les modules de communication (C) des drones maître (2) et suiveurs (31, 32, 33, 34, 35, 36) sont des modules de communication acoustique.

3. Système (1) selon l'une des revendications précédentes, dans lequel le drone maître (2) est agencé pour émettre périodiquement des instructions de navigation (I) à destination de tous les drones suiveurs (31, 32, 33, 34, 35, 36), chaque drone suiveur étant agencé pour se déplacer conformément à la dernière instruction reçue jusqu'à réception de l'instruction suivante.

4. Système (1) selon la revendication précédente, dans lequel le drone maître (2) est agencé pour déterminer de façon périodique, à partir du plan de vol (E), un cap à suivre (Cm) et une géométrie de formation (GF) des drones suiveurs (31, 32, 33, 34, 35, 36), chaque instruction de navigation (I) émise par le drone maître à destination de tous les drones suiveurs (31, 32, 33, 34, 35, 36) comprenant ledit cap à suivre et ladite géométrie de formation, et dans lequel chaque drone suiveur est agencé, à la réception de chaque instruction de navigation, pour se déplacer dans une direction conforme audit cap à suivre, et pour déterminer et adopter une position relative (d1) par rapport au drone maître conforme à ladite géométrie de formation, jusqu'à la réception de l'instruction de navigation suivante.

5. Système (1) selon l'une des revendications précédentes, dans lequel chaque drone suiveur (31, 32, 33, 34, 35, 36) comporte un système de navigation (N) agencé pour déterminer une position (P1, P2, P3, P4, P5, P6) du drone suiveur à un instant donné et pour se déplacer depuis cette position déterminée en fonction de l'instruction de navigation (I) reçue du drone maître (2).

6. Système (1) selon la revendication précédente, dans lequel le système de navigation (N) de chaque drone suiveur (31, 32, 33, 34, 35, 36) est agencé pour déterminer une altitude du drone suiveur par rapport au fond marin à un instant donné, chaque drone suiveur étant agencé pour se déplacer en conservant une altitude constante par rapport au fond marin.

7. Système (1) selon l'une des revendications 5 ou 6, dans lequel le module de communication (C) de chaque drone suiveur (31, 32, 33, 34, 35, 36) est agencé pour transmettre au drone maître (2) un signal (S1, S2, S3, S4, S5, S6) comportant ladite position déterminée (P1, P2, P3, P4, P5, P6) du drone suiveur.

8. Système (1) selon la revendication précédente en combinaison avec la revendication 4, dans lequel le module de communication (C) de chaque drone suiveur (31, 32, 33, 34, 35, 36) est agencé pour transmettre au drone maître (2) un signal (S1, S2, S3, S4, S5, S6) comportant ladite position déterminée (P1, P2, P3, P4, P5, P6) du drone suiveur et un état de fonctionnement (E1, E2, E3, E4, E5, E6) du drone suiveur, le drone maître étant agencé pour déterminer, à partir de l'état de fonctionnement des drones suiveurs, ledit cap à suivre (Cm) et ladite géométrie de formation (GF).

9. Système (1) selon la revendication 7 ou 8, dans lequel le module de communication (C) de chaque drone suiveur (31, 32, 33, 34, 35, 36) est agencé pour recevoir un écho (S1') du signal (S1) émis par le module de communication (C) du drone suiveur au drone maître (2) et réfléchi par le drone maître et pour déterminer à partir dudit écho une distance relative (d1) séparant le drone suiveur du drone maître ; et dans lequel le système de navigation (N) du drone suiveur est agencé pour déterminer ladite position (P1, P2, P3, P4, P5, P6) du drone suiveur audit instant donné à l'aide de ladite distance relative déterminée.

10. Système (1) selon l'une des revendications précédentes, dans lequel le drone maître (2) comporte une pluralité de systèmes de caractérisation du fond marin de types différents (SBM, SBL).

11. Système (1) selon l'une des revendications précédentes, dans lequel le système (1) comporte un module de traitement de données agencé pour extraire à partir du champ magnétique mesuré une valeur indépendante des valeurs du champ magnétique ambiant et du champ magnétique propre au drone suiveur et à détecter à partir de ladite valeur une anomalie magnétique (A).

12. Procédé d'exploration sous-marine mis en œuvre par un système d'exploration sous-marine (1) selon l'une des revendications 1 à 11.

**Patentansprüche**

1. Unterwassererkundungssystem (1), umfassend:

a. eine übergeordnete Unterwasserdrohne (2), die zum sich Bewegen auf autonome Weise gemäß einem zuvor bestimmten Flugplan (E) angeordnet ist, und umfassend mindestens zwei Systeme zum Charakterisieren des Meeresbodens und ein Kommunikationsmodul (C) zum Übertragen von Kommunikationssignalen;
b. eine Vielzahl von begleitenden Unterwasserdrohnen (31, 32, 33, 34, 35, 36), jede umfassend mindestens einen Magnetfeldsensor (D), der geeignet ist, um das Magnetfeld in der Nähe der begleitenden Drohne zu messen, jede begleitende Drohne ferner umfassend ein Kommunikationsmodul (C) zum Empfangen von Kommunikationssignalen von der übergeordneten Drohne;
c. wobei die übergeordnete Drohne zum Übertragen von Navigationsanweisungen (I) an die begleitenden Drohnen angeordnet ist, und jede begleitende Drohne zum sich Bewegen auf autonome Weise gemäß der Bewegungsanweisung angeordnet ist, sodass ihre Bewegung der Bewegung der übergeordneten Drohne nachgeführt wird.

2. System (1) nach dem vorstehenden Anspruch, wobei die Kommunikationsmodule (C) der übergeordneten Drohne (2) und der begleitenden Drohnen (31, 32, 33, 34, 35, 36) Module für akustische Kommunikation sind.

3. System (1) nach einem der vorstehenden Ansprüche, wobei die übergeordnete Drohne (2) zum periodischen Übertragen von Navigationsanweisungen (I) an alle begleitenden Drohnen (31, 32, 33, 34, 35, 36) angeordnet ist, wobei jede begleitende Drohne zum sich Bewegen entsprechend der zuletzt empfangenen Anweisung angeordnet ist, bis die nächste Anweisung empfangen wird.

4. System (1) nach dem vorstehenden Anspruch, wobei die übergeordnete Drohne (2) zum Bestimmen, aus dem Flugplan (E), eines zu befolgenden Kurses (Cm) und einer Formationsgeometrie (GF) der begleitenden Drohnen (31, 32, 33, 34, 35, 36), auf periodische Weise angeordnet ist, wobei jede Navigationsanweisung (I), die durch die übergeordnete Drohne an alle begleitenden Drohnen (31, 32, 33, 34, 35, 36) übertragen wird, den zu befolgenden Kurs und die Formationsgeometrie aufweist, und wobei jede begleitende Drohne, nach dem Empfang jeder Navigationsanweisung, zum sich Bewegen in eine Richtung, die dem zu folgenden Kurs entspricht, und zum Bestimmen und Einnehmen einer relativen Position (d1) in Bezug auf die übergeordnete Drohne angeordnet ist, die dieser Formationsgeometrie entspricht, bis die nächste Navigationsanweisung empfangen wird.

5. System (1) nach einem der vorstehenden Ansprüche, wobei jede begleitende Drohne (31, 32, 33, 34, 35, 36) ein Navigationssystem (N) umfasst, das zum Bestimmen einer Position (P1, P2, P3, P4, P5, P6) der begleitenden Drohne zu einem gegebenen Zeitpunkt und zum sich Bewegen von dieser bestimmten Position in Abhängigkeit von der Navigationsanweisung (I) angeordnet ist, die von der übergeordneten Drohne (2) empfangen wird.

6. System (1) nach dem vorstehenden Anspruch, wobei das Navigationssystem (N) jeder begleitenden Drohne (31, 32, 33, 34, 35, 36) zum Bestimmen einer relativen Höhe der begleitenden Drohne zu einem gegebenen Zeitpunkt in Bezug auf den Meeresboden angeordnet ist, wobei jede begleitende Drohne zum sich Bewegen angeordnet ist, wobei eine konstante Höhe in Bezug auf den Meeresboden beibehalten wird.

7. System (1) nach einem der Ansprüche 5 oder 6, wobei das Kommunikationsmodul (C) jeder begleitenden Drohne (31, 32, 33, 34, 35, 36) zum Senden an die übergeordnete Drohne (2) eines Signals (S1, S2, S3, S4, S5, S6) angeordnet ist, umfassend die bestimmte Position (P1, P2, P3, P4, P5, P6) der begleitenden Drohne.

8. System (1) nach dem vorstehenden Anspruch in Kombination mit Anspruch 4, wobei das Kommunikationsmodul (C) jeder begleitenden Drohne (31, 32, 33, 34, 35, 36) zum Senden an die übergeordnete Drohne (2) eines Signals (S1, S2, S3, S4, S5, S6) angeordnet ist, umfassend die bestimmte Position (P1, P2, P3, P4, P5, P6) der begleitenden Drohne und einen Betriebszustand (E1, E2, E3, E4, E5, E6) der begleitenden Drohne, wobei die übergeordnete Drohne zum Bestimmen, aus dem Betriebszustand der begleitenden Drohnen, des zu befolgenden Kurses (Cm) und der Formationsgeometrie (GF) angeordnet ist.

9. System (1) nach Anspruch 7 oder 8, wobei das Kommunikationsmodul (C) jeder begleitenden Drohne (31, 32, 33, 34, 35, 36) zum Empfangen eines Echos (S1') des Signals (S1), das durch das Kommunikationsmodul (C) der begleitenden Drohne an die übergeordnete Drohne (2) übertragen wird und durch die übergeordnete Drohne reflektiert wird, und zum Bestimmen, aus diesem Echo, einer relativen Entfernung (d1) angeordnet ist, die die begleitende Drohne von der übergeordneten Drohne trennt; und wobei das Navigationssystem (N) der begleitenden Drohne zum Bestimmen der Position (P1, P2, P3, P4, P5, P6) der begleitenden Drohne zu dem gegebenen Zeitpunkt mittels der bestimmten relativen Entfernung angeordnet ist.

10. System (1) nach einem der vorstehenden Ansprüche, wobei die übergeordnete Drohne (2) eine Vielzahl von Meeresbodencharakterisierungssystemen unterschiedlicher Arten (SBM, SBL) umfasst.

11. System (1) nach einem der vorstehenden Ansprüche, wobei das System (1) ein Datenverarbeitungsmodul umfasst, das zum Extrahieren aus dem gemessenen Magnetfeld eines Werts, der unabhängig von den Werten des Umgebungsmagnetfelds und des spezifischen Magnetfelds für die begleitende Drohne ist, und zum Erkennen aus diesem Wert einer magnetischen Anomalie (A) angeordnet ist.

12. Unterwassererkundungsverfahren, das durch ein Unterwassererkundungssystem (1) nach einem der Ansprüche 1 bis 11 implementiert wird.

## Claims

1. Submarine exploration system (1) comprising:

   a. a master submarine drone (2) which is designed to move autonomously according to a predetermined flight plan (E) and comprises at least two seabed characterization systems and a communication module (C) for transmitting communication signals;
   b. a plurality of follower submarine drones (31, 32, 33, 34, 35, 36) which each comprise at least one magnetic field sensor (D) capable of measuring the magnetic field in the vicinity of the follower drone, each follower drone further comprising a communication module (C) for receiving communication signals from the master drone;
   c. the master drone being designed to transmit navigation instructions (I) to the follower drones and each follower drone being designed to move autonomously according to the movement instruction so that its movement is slaved to the movement of the master drone.

2. System (1) according to the preceding claim, wherein the communication modules (C) of the master drone (2) and follower drones (31, 32, 33, 34, 35, 36) are acoustic communication modules.

3. System (1) according to either of the preceding claims, wherein the master drone (2) is designed to periodically transmit navigation instructions (I) to all the follower drones (31, 32, 33, 34, 35, 36), each follower drone being designed to move in accordance with the last instruction received until the next instruction is received.

4. System (1) according to the preceding claim, wherein the master drone (2) is designed to periodically determine, from the flight plan (E), a course (Cm) to follow and a formation geometry (GF) of the follower drones (31, 32, 33, 34, 35, 36), each navigation instruction (I) transmitted by the master drone to all the follower drones (31, 32, 33, 34, 35, 36) comprising the course to follow and the formation geometry, and wherein each follower drone is designed, when each navigation instruction is received, to move in a direction which conforms to the course to follow and to determine and adopt a relative position (d1) with respect to the master drone which conforms to the formation geometry until the next navigation instruction is received.

5. System (1) according to any of the preceding claims, wherein each follower drone (31, 32, 33, 34, 35, 36) comprises a navigation system (N) which is designed to determine a position (P1, P2, P3, P4, P5, P6) of the follower drone at a particular time and to move from this determined position depending on the the navigation instruction (I) received from the master drone (2).

6. System (1) according to the preceding claim, wherein the navigation system (N) of each follower drone (31, 32, 33, 34, 35, 36) is designed to determine an altitude of the follower drone with respect to the seabed at a particular time, each follower drone being designed to move while maintaining a constant altitude with respect to the seabed.

7. System (1) according to either of claims 5 or 6, wherein the communication module (C) of each follower drone (31, 32, 33, 34, 35, 36) is designed to transmit a signal (S1, S2, S3, S4, S5, S6) comprising the determined position (P1, P2, P3, P4, P5, P6) of the follower drone to the master drone (2).

8. System (1) according to the preceding claim in combination with claim 4, wherein the communication module (C) of each follower drone (31, 32, 33, 34, 35, 36) is designed to transmit a signal (S1, S2, S3, S4, S5, S6) comprising the determined position (P1, P2, P3, P4, P5, P6) of the follower drone and an operating state (E1, E2, E3, E4, E5, E6) of the follower drone to the master drone (2), the master drone being designed to determine, from the operating state of the follower drones, the course (Cm) to follow and the formation geometry (GF).

9. System (1) according to claim 7 or claim 8, wherein the communication module (C) of each follower drone (31, 32, 33, 34, 35, 36) is designed to receive an echo (S1') of the signal (S1) which is transmitted by the communication module (C) of the follower drone to the master drone (2) and reflected by the master drone and to determine, from the echo, a relative distance (d1) separating the follower drone from the master drone; and wherein the navigation system (N) of the follower drone is designed to determine the position (P1, P2, P3, P4, P5, P6) of the follower drone at the particular time using the determined relative distance.

10. System (1) according to any of the preceding claims, wherein the master drone (2) comprises a plurality of different types of seabed characterization systems (SBM, SBL).

11. System (1) according to any of the preceding claims, wherein the system (1) comprises a data processing module which is designed to extract, from the measured magnetic field, a value which is independent of the values of the ambient magnetic field and the magnetic field specific to the follower drone and to detect a magnetic anomaly (A) from said value.

12. Submarine exploration method which is carried out by a submarine exploration system (1) according to any of claims 1 to 11.

[Fig. 1]

[Fig. 2]

## [Fig. 3]

| F | I | G | S1 | G | S2 | G | M | G | S3 | G | S4 | G | M | G | S5 | G | S6 | G | E |
|---|---|---|----|---|----|---|---|---|----|---|----|---|---|---|----|---|----|---|---|
| 2 | Cm, GF | | | | | | Cm, GF | | | | | | Cm, GF | | | | | | E |
| 31 | | | P1, E1 | | | | | | | | | | | | | | | | |
| 32 | | | | | P2, E2 | | | | | | | | | | | | | | |
| 33 | | | | | | | | | P3, E3 | | | | | | | | | | |
| 34 | | | | | | | | | | | P4, E4 | | | | | | | | |
| 35 | | | | | | | | | | | | | | | P5, E5 | | | | |
| 36 | | | | | | | | | | | | | | | | | P6, E6 | | |

[Fig. 4]

[Fig. 5]

[Fig. 6]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016038453 A

- WO 2012052564 A